# EUROPEAN PATENT SPECIFICATION

(11) **EP 3 297 063 B1**
(45) Date of publication and mention of the grant of the patent: **29.07.2020**
(21) Application number: 15891488.7
(22) Date of filing: 11.05.2015
(51) Int. Cl.: H01M 2/14, H01M 2/16, H01M 10/0525

(54) **COMPOSITE DIAPHRAGM AND LITHIUM ION BATTERY USING SAME**
ZUSAMMENGESETZTE MEMBRAN UND LITHIUM-IONEN-BATTERIE DAMIT
MEMBRANE COMPOSITE ET BATTERIE AU LITHIUM-ION L'UTILISANT

(43) Date of publication of application: 21.03.2018
(73) Proprietor: Contemporary Amperex Technology Co., Limited, Jiaocheng District Ningde City Fujian 352100 (CN)
(72) Inventor: YUAN, Chenglong, Ningde Fujian 352100 (CN); PENG, Ning, Ningde Fujian 352100 (CN); GUO, Chao, Ningde Fujian 352100 (CN); ZHANG, Shengwu, Ningde Fujian 352100 (CN)
(74) Representative: Petraz, Gilberto Luigi
(86) International application number: PCT/CN2015/078702
(87) International publication number: WO 2016/179785

(56) References cited:
- EP-A1- 2 835 844
- WO-A1-2014/104677
- CN-A- 103 059 613
- CN-A- 103 579 564
- CN-A- 103 811 702
- CN-A- 103 872 385
- CN-A- 103 915 591
- CN-A- 104 332 578
- US-A1- 2014 287 294

## Description

### TECHNICAL FIELD

The present application relates to the field of lithium-ion battery technologies and, particularly relates to a composite separator for a lithium-ion battery and a lithium-ion battery using the composite separator.

### BACKGROUND

A lithium-ion battery has been widely used in mobile communication and electronic consumer products (for example, cell phones, notebook computers, etc.) because of its unique advantages of high power density. The currently developed lithium-ion battery with large capacity has been widely applied as a power source of electric vehicles. Generally, the lithium-ion battery includes a positive electrode, a negative electrode, a separator, an electrolyte, and cell structural parts. The separator is a key component in the lithium-ion battery, which is insulated from electrons but conductive for ions, and can separate a cathode from an anode of the lithium-ion battery, thereby preventing short circuit caused by direct contact of two electrodes of the cell. However, the separator is generally a porous membrane made of polyolefin polymers, and such polymers contract in high temperature environment, which results in large contact area between the positive electrode and the negative electrode of the cell, and rapidly generates large amount of heat, causing thermal runaway, burning or explosion of the battery. Such problem has become a key issue to be solved. After years' researches, an inorganic ceramic-coated separator, due to its excellent high-temperature resistance and safety performance, has been widely applied in the power battery field.

The inorganic ceramic-coated separator is formed by coating a layer of inorganic ceramic particles on a single surface or double surfaces of a porous polyolefin substrate. Since the inorganic ceramic powder material has hydrophilic surface with poor surface compatibility with a hydrophobic separator substrate, such as polyethylene (PE), polypropylene (PP), etc., it readily causes quality problems such as poor cohesive force of the coating layer during coating the ceramic powders, surface cracking, aging and change in porosity, etc., further causing detachment of the powders during subsequent winding of the separator. Moreover, the ceramic particles detached from the surface of the separator are sandwiched between the separator and the electrode, so that the separator will be punctured during a hot pressing test of the cell, causing a low rate of finished products. Even the cell passes the hot pressing test, the ceramic particles sandwiched between the separator and the electrode will cause micro-short circuit within the separator, high probability of subsequent self-discharging of the cell, and even severe safety problems (e.g., internal short circuit). In order to solve this problem, one object of the present application is to provide a method for preparing a ceramic-coated separator, which can improve cohesion force of the ceramic coating layer and interfacial adhesion force of the separator, thereby effectively solving the powder detachment and peeling problems of the ceramic layer coated on the surface of the polyolefin separator, and improving product quality and safety performance of the battery. A water-based ceramic coating lithium ion battery diaphragm is disclosed in CN103915591A. The water-based ceramic coating lithium ion battery diaphragm comprises a polyolefin porous membrane and a coating consisting of 20-60 percent by weight of base material and 40-80 percent of water. The base material comprises 0.1-5 parts by weight of a water-soluble high polymer thickener, 0.1-5 parts of a water-based dispenser, 0.1-10 parts of a water-based adhesive and 80-99.7 parts of boehmite particles. In CN104332578A, an adhesive composite diaphragm includes a polyolefin porous membrane and one or two hybrid coatings applied onto one or two sides of the polyolefin porous membrane. Each hybrid coating contains 10-50 parts by mass of polymer particles and 50-90 parts by mass of ceramic particles. EP2835844A1 teaches of a secondary battery separator including an organic separator layer, a heat-durable layer formed adjacent to at least one surface of the organic separator layer, and an adhesive layer formed on the heat-durable layer. The heat-durable layer contains non-conductive particles and a binder, and the adhesive layer contains a particulate polymer. Further, it is also know in WO2014104677A1 that a coating layer of a micro-porous hybrid film can include the polymer, an inorganic particle, an organic particle, or a mixed particle of the inorganic and organic particles.

### SUMMARY

A purpose of the present application is to provide a method for preparing a separator for a lithium-ion battery, which can improve cohesion force of the inorganic particle coating layer. Interfacial adhesion force of the composite separator prepared by such method is also enhanced, which solves the problem of powder detachment of inorganic particles during preparing and winding of the composite separator. The composite separator of the present application combines an inorganic particle material with a specific functional group and a binder with a functional group matching with the specific functional group of the inorganic particle material, so that interaction (e.g., binding of hydrogen bonds) of the functional groups increases the adhesion force between the inorganic particles, thereby reducing the powder detachment and peeling problems due to weak adhesion force of the inorganic particles.

One aspect of the present application provides a composite separator for a lithium-ion battery, including a polyolefin substrate, and a coating layer formed on a surface of the polyolefin substrate. The coating layer includes a binder and inorganic particles, and a hydrogen bond is formed between the binder and the inorganic particles.

The binder includes an aqueous binder containing -CO- or -CN functional group; and the inorganic particles contain -OH functional group. A particle size D50 of the inorganic particles is 0.3µm<D50<3µm, and a particle size D100 of the inorganic particles is 1 µm <D100<15µm.

The binder is formed by polymerizing one or more monomers selected form a group consisting of acrylate, alkenyl carboxylate, and alkenyl nitrile.

The acrylate refers to a monomer having a structural formula shown in formula 1:

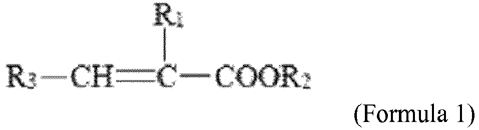

In formula 1, R₁ can be independently H or alkyl having 1-3 carbon atoms; R₂ can be independently alkyl having 1-4 carbon atoms; and R₃ can be independently H or alkyl having 1-3 carbon atoms.

The alkenyl carboxylate refers to a monomer having a structural formula shown in formula 2:

R₄-CH₂COOR₅ (Formula 2)

In formula 2, R₅ can be independently alkenyl having 2-4 carbon atoms; and R₄ can be independently H or alkyl having 1-3 carbon atoms.

The alkenyl nitrile refers to a monomer having a structural formula as shown in formula 3:

R₆-CN (Formula 3)

In formula 3, R₆ can be independently alkenyl having 2-5 carbon atoms.

Examples of the alkyl can include methyl, ethyl, propyl, isopropyl, and butyl. Examples of the alkenyl can include vinyl, propenyl, allyl, isopropenyl, butenyl, and pentenyl.

The acrylate is preferably methyl acrylate, ethyl acrylate, methyl methacrylate, or ethyl methacrylate.

The alkenyl carboxylate is preferably vinyl acetate.

The alkenyl nitrile is preferably acrylonitrile.

The binder can be polymerized by a conventional polymerization method, for example, bulk polymerization method and emulsion polymerization method. Reagents and additives in polymerization can be added during the polymerization according to actual need. Examples of the reagents and additives in polymerization may include initiator, catalyst, emulsifier, dispersant, molecular weight regulator, and terminator, etc.

The binder can further include carboxymethyl cellulose (CMC).

The inorganic particles are selected from a group consisting of boehmite particles, aluminum hydroxide particles, magnesium hydroxide particles, and combinations thereof.

A thickness of the composite separator is in a range of 6µm-30µm.

A thickness of the coating layer is in a range of 2µm -6µm.

The coating layer is formed on a single surface or double surfaces of the polyolefin substrate.

Another aspect of the present application provides a method for preparing a composite separator for a lithium-ion battery, using inorganic powder particles with a crystal structure containing covalent bond -OH functional group, and an aqueous binder containing -CO- or -CN functional group.

The composite separator of the present application is prepared by using inorganic powder particles with a crystal structure containing specific covalent bond -OH functional group, and a corresponding aqueous binder containing -CO- or -CN functional group to form an inorganic particle coating layer. The covalent bond -OH contained in the crystal structure and the -CO- or -CN contained in the binder form hydrogen bonding force shown as follows: 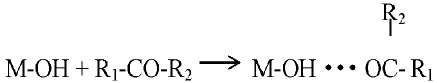 Hydrogen bonding principles

M-OH+R₃-CN→M-OH···NC-R₃ Hydrogen bonding principles

Since the inorganic particles and the binder form a strong hydrogen bonding force, the adhesion force of the inorganic particles of the composite separator of the present application is greater than the coating layer of the separator disclosed in related literature using oxide ceramics such as aluminum oxide, silicon dioxide, etc.

Therefore, compared with the existing composite separator of the lithium-ion battery, the composite separator of the present application at least has the following beneficial effects:

The composite separator prepared in the present application adopts a binder and inorganic particles with specific functional groups, so that mutual coupling between the binder and the inorganic particles is enhanced, the hydrogen bonding improves the adhesion force of the coating layer, thereby reducing the problems of detachment of the inorganic particles due to poor adhesion force of the coating layer and surface cracking during actual coating process. In the present application, product quality of the lithium-ion battery using the composite separator is improved, and the risk of influencing the safety performance of the battery due to detachment of the inorganic particles is reduced.

### BRIEF DESCRIPTION OF DRAWINGS

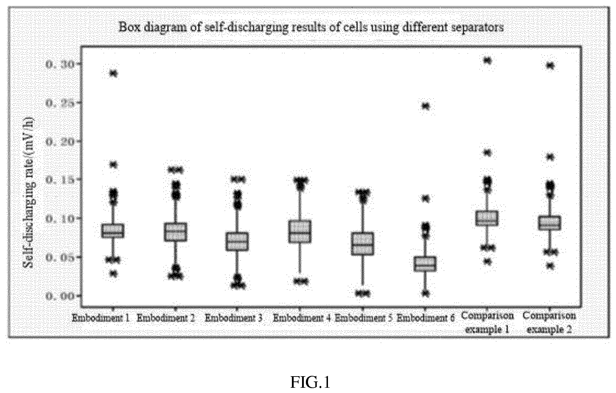

FIG. 1 illustrates a comparison graph of self-discharging test results of cells assembled with different separators in embodiments of the present application and comparison examples.

### DESCRIPTION OF EMBODIMENTS

The composite separator, the method for preparing the composite separator, and the lithium-ion battery using the composite separator of the present application are illustrated with reference to the embodiments.

### Embodiment 1:

Aluminum hydroxide (Al(OH)₃) particles (D50, 1.5µm; D100, 10µm) are selected as inorganic particles; and polymethyl methacrylate is selected as a binder. Firstly, deionized water is added into a planetary stirring tank, then the aluminum hydroxide particles are tiled within the deionized water to reach a solid content of 60%, then a mixture of the above described compositions is stirred for 60min, successively, the binder polymethyl methacrylate is added into the mixture at twice, the attached compositions on a tank wall is scraped once, and then the mixture is further stirred for 180min at a temperature of 25-35 °C, so as to obtain a slurry. Subsequently, the slurry is transferred into an ultrafine dispersion machine and is dispersed. The dispersed slurry is uniformly coated on a single surface of a PE separator to form a coating layer with a thickness of 3µm. The coated separator is then dried in an oven and winded, so as to obtain a composite separator with an aluminum hydroxide particle coating layer for a lithium-ion battery. A thickness of the obtained composite separator is 15µm.

### Embodiment 2:

Boehmite particles (D50, 1.6µm; D100, 12µm) are selected as inorganic particles; and polyvinyl acetate is selected as a binder. A slurry is obtained according to the stirring procedure in Embodiment 1, and the obtained slurry is uniformly coated on a single surface of a PE separator to form a coating layer with a thickness of 3µm. The coated separator is then dried in an oven and winded, so as to obtain a composite separator with a boehmite particle coating layer for a lithium-ion battery. A thickness of the obtained composite separator is 15µm.

### Embodiment 3:

Boehmite particles (D50, 1.6µm; D100, 12µm) are selected as inorganic particles, and polymethyl acrylate is selected as a binder. A slurry is obtained according to the stirring procedure in Embodiment 1, and the obtained slurry is uniformly coated on a single surface of a PE separator to form a coating layer with a thickness of 3µm. The coated separator is then dried in an oven, and winded, so as to obtain a composite separator with a boehmite particle coating layer for a lithium-ion battery. A thickness of the obtained composite separator is 15µm.

### Embodiment 4:

Magnesium hydroxide particles containing -OH (D50, 1.4µm; D100, 10µm) are selected as inorganic particles, and a binder is acrylic emulsion (manufactured by Qingdao Dike New Material Corporation, Ltd). A slurry is obtained according to the stirring procedure in Embodiment 1, and the obtained slurry is uniformly coated on a single surface of a PE separator to form a coating layer with a thickness of 3µm. The coated separator is then dried in an oven and winded, so as to obtain a composite separator with a magnesium hydroxide coating layer for a lithium-ion battery. A thickness of the obtained composite separator is 15µm.

### Embodiment 5:

Boehmite particles (D50, 1.5µm; D100, 12µm) are selected as inorganic particles, and a binder is a water soluble acrylonitrile containing -CN functional group (LA132, manufactured by Xuzhou Zhuoyuan Chemical Corporation, Ltd). A slurry is obtained according to the stirring procedure in Embodiment 1, and the obtained slurry is uniformly coated on a single surface of a PE separator to form a coating layer with a thickness of 3µm. The coated separator is then dried in an oven, and winded, so as to obtain a composite separator with a boehmite particle coating layer for a lithium-ion battery. A thickness of the obtained composite separator is 15µm.

### Embodiment 6:

In order to further improve the stability of the slurry and coating adhesion force, 0.4% CMC binder is further added in the formulation of Embodiment 3. The obtained slurry is coated and dried, and the obtained separator is winded, so as to obtain a composite separator for a lithium-ion battery. A thickness of the obtained composite separator is 15µm.

### Embodiment 7:

Boehmite particles (D50, 1.6µm; D100, 12µm) are selected as inorganic particles, and a binder is polymethyl acrylate copolymer. A slurry is obtained according to the stirring procedure in Embodiment 1, and the obtained slurry is uniformly coated on double surfaces of a PE separator to form two coating layers (each coating layer has a thickness of 2µm) on the surfaces of the PE separator. The coated separator is then dried in an oven, and is winded, so as to obtain a composite separator with two boehmite particle coating layers for a lithium-ion battery. A thickness of the obtained composite separator is 6µm.

Comparison example 1: Polyvinyl acetate is selected as a binder, and conventional aluminum oxide inorganic particles without covalent bond -OH are used to prepare aluminum oxide ceramic particles. A slurry containing the binder and the ceramic particles is obtained according to the stirring procedure in Embodiment 1, and the obtained slurry is uniformly coated on a single surface of a PE separator to form a coating layer with a thickness controlled in a range of 2-4 µm. The coated separator is then dried and winded, so as to obtain a composite separator with a ceramic coating layer for a lithium-ion battery.

Comparison example 2: Boehmite particles are selected as inorganic particles, and PVDF polymer without -CO- or -CN is used as a binder. A slurry containing the inorganic particles and the binder is obtained according to the stirring procedure in Embodiment 1, and the obtained slurry is uniformly coated on a single surface of a PE separator to form a coating layer with a thickness controlled in a range of 2-4µm. The coated separator is then dried and winded, so as to obtain a composite separator with a boehmite particle coating layer for a lithium-ion battery.

### Preparation of lithium-ion battery:

Lithium iron phosphate (LFP) is used as a cathode active material. 90wt% LFP active material is added into N-methyl-2-pyrrolidone (NMP) solvent, then 5wt% acetylene black as a conductive agent and 5wt% polyvinylidene fluoride (PVDF) as a binder are added, stirred, and dispersed so as to form a cathode slurry. The obtained cathode slurry is uniformly coated on an aluminum foil current collector with a thickness of 20µm, then dried, and cold pressed so as to form a cathode plate.

Graphite (C) is used as an anode active material. 92wt% graphite (C) is added into a deionized water solvent, then 3wt% carbon black as a conductive agent, and 1.5wt% hydroxymethyl cellulose (CMC) and 3.5wt% styrene-butadiene rubber (SBR) as the binder are added, stirred, and dispersed so as to form an anode slurry. The obtained anode slurry is uniformly coated on a copper foil current collector with a thickness of 8µm, then dried, and cold pressed so as to form a anode plate.

The anode plate and cathode plate as prepared above and the eight different composite separators from Embodiment 1-6 and Comparison examples 1-2 are winded to form cell assembles, respectively. Each cell assembly is hot pressed, packaged, and then injected with an electrolyte solution (electrolyte: 1mol/L lithium hexafluorophosphate, solvent (volume ratio): vinyl carbonate: dimethyl carbonate=1: 2), so as to obtain a lithium-ion battery.

### Test example 1: the cohesion force of the coating layers of different composite separators coated with the coating layers is analyzed.

Test samples are the different composite separators with coating layers for lithium-ion batteries obtained according to Embodiments 1-7, and contrast samples are the composite separator prepared by using aluminum oxide particles without covalent bond -OH in Comparison example 1 and the composite separator prepared by using boehmite particles and the binder without -CO- or -CN in Comparison example 2. The cohesion force of the coating layers is tested by a method as follows: a green glue is adhered on a surface of the composite separator, then a 50N compression roller is used to roll on the green glue adhered on the composite separator for three times, and then a tesometer is used to 180° peel the green glue with a speed of 5mm/min. The tested results are shown in Table 1. It can be known from Table 1 that: the adhesion force of the coating layer in the composite separators prepared by the method of the present application is greater than that of Comparison examples 1-2, and the improvement on cohesion force of the coating layer can reduce the powder detachment and peeling problems of the inorganic particles in a subsequent process.

**Table 1 Test result of cohesion force of coating layers of different separators in the Embodiments and Comparison examples**

| Test object | Embodi ment 1 | Embodi ment 2 | Embodi ment 3 | Embodi ment 4 | Embodi ment 5 | Embodi ment 6 | Embodi ment 7 | Comparis on example 1 | Comparis on example 2 |
|---|---|---|---|---|---|---|---|---|---|
| Adhesio n force of the coating layer/N | 6.5 | 7.2 | 8.7 | 7.5 | 8.3 | 9.8 | 9.0 | 5.5 | 5.6 |

### Test example 2: comparison of short circuit rate during assembling and hot pressing of the cell.

The cathode plate, the anode plate, and the several different ceramic-coated separators obtained in Embodiment 1-7 and Comparison examples 1-2 are winded to form different cell assemblies. Each cell assembly is hot pressed with a force of 1000kgf under a temperature of 80°C, and then tested for short circuit by a Hi-pot tester (voltage: 200V; internal resistance: 20MΩ). Internal short circuit results of cells with different ceramic separators are provided in Table 2. It can be known from the testing results that, the short circuit rate of cells using the composite separators prepared with boehmite ceramic particles containing -OH and binder containing -CO- or -CN in the Embodiments is significantly lower than that of the cells in Comparison examples 1-2. This is because adhesion force of the coating layer formed by boehmite ceramic particles containing covalent bond -OH and the binder containing -CO- or -CN is increased due to the hydrogen bonding effect during the preparation of the composite separator. While the adhesion force of the coating layer is relatively small, when it is formed by aluminum oxide without covalent bond -OH and the binder containing -CO- or -CN, or formed by boehmite ceramic particles containing covalent bond -OH and PVDF without -CO- or -CN, thus ceramic particles easily detach and get sandwiched between the electrode plate and the separator during cutting and winding of the composite separator, resulting in that the separator is punctured by the ceramic particles under high pressure. Therefore, ceramic particle black points can be seen on the surface of the separator when the cell is disassembled.

**Table 2: Short circuit results of cells formed by ceramic separators**

| Test object | Embodi ment 1 | Embodi ment 2 | Embodi ment 3 | Embodi ment 4 | Embodi ment 5 | Embodi ment 6 | Embodi ment 7 | Comparis on example 1 | Comparis on example 2 |
|---|---|---|---|---|---|---|---|---|---|
| Short circuit rate | 0.15% | 0.11% | 0.05% | 0.12% | 0.09% | 0.02% | 0.03% | 0.25% | 0.23% |

### Test example 3: comparison of self-discharging rates of lithium-ion batteries assembled with different separators

Self-discharging rates of the above prepared lithium-ion batteries using ceramic-coated separators obtained in different embodiments and comparison examples are tested for comparison. The batteries are fully charged to 3.65V, and voltages of the tested batteries are tested and recorded as V₀; the batteries are then let standby for 30 days at a high environment temperature of 45°C, and the voltage is tested again and recorded as V₁. Self-discharging result of the lithium-ion battery within unit time (i.e., self-discharging rate) is calculated by an equation: Self-discharging rate = (V₀-V₁)/(30^{∗}24h), so as to obtain the unit time self-discharge results of lithium-ion batteries prepared by using different separators, as shown in FIG. 1. It can be known from FIG. 1 that, self-discharging rates of the lithium-ion batteries assembled by using the separators prepared in Embodiment 1-6 are lower than self-discharging rates of the lithium-ion batteries assembled by using the separators prepared in Comparison examples land 2. The principles lie in that: since the cohesion force of the coating layers of the ceramic-coated separators prepared in Comparison examples 1 and 2 is small during entire preparation of the separators, and the ceramic particles easily detach and get sandwiched inside the cell, and the sandwiched ceramic particles puncture the separator after charge-discharge test, resulting in micro-short circuit inside the battery and causing irreversible reaction, further speeding self-discharging rate within the battery.

In summary, based on comparison of the test data, we can conclude that, adhesion force of the coating layer of the composite separator prepared by using boehmite inorganic ceramic particles, short circuit rate of cells using the composite separator, and self-discharging rate of batteries using the composite separator are better than the existing aluminum oxide ceramic-coated separator; in addition, from the contrast data of Embodiment 6, it can be found that the separator prepared by using a composite binder of polymethyl acrylate and CMC demonstrates the optimum performance. By comparing data of Embodiment 7 and Embodiment 3, it can be found that the cohesion force of the coating layer and cell short circuit situation of a double-surface coated separator is better than those of a single-surface coated separator.

The embodiments are merely used to explain the invention concept of the present application, rather than limit the present application. It should be understood that, the present application can further include many other embodiments, and those skilled in the art can also make various changes and modifications to the present application without departing from essence of the present application, and all those changes and modifications shall fall into the protection scope of the claims of the present application.

## Claims

1. A composite separator for a lithium-ion battery, comprising a polyolefin substrate and a coating layer formed on a surface of the polyolefin substrate, the coating layer comprising a binder and inorganic particles, wherein a hydrogen bond is formed between the binder and the inorganic particles,
the binder comprises an aqueous binder containing -CO- or -CN functional group, and the inorganic particles contain -OH functional group, and
a particle size D50 of the inorganic particles is greater than 0.3µm and smaller than 3 µm, and a particle size D100 of the inorganic particles is greater than 1 µm and smaller than 15µm.

2. The composite separator for a lithium-ion battery according to claim 1, wherein the binder is formed by polymerizing one or more monomers selected from a group consisting of acrylate, alkenyl carboxylate, and alkenyl nitrile.

3. The composite separator for a lithium-ion battery according to claim 1, wherein the binder further comprises carboxymethyl cellulose.

4. The composite separator for a lithium-ion battery according to claim 1, wherein the inorganic particles are selected from a group consisting of boehmite particles, aluminum hydroxide particles, magnesium hydroxide particles, and combinations thereof.

5. The composite separator for a lithium-ion battery according to claim 1, wherein a thickness of the composite separator is in a range of 6µm-30µm.

6. The composite separator for a lithium-ion battery according to claim 1, wherein a thickness of the coating layer is in a range of 2-6µm.

7. The composite separator for a lithium-ion battery according to claim 1, wherein the coating layer is formed on a single surface or double surfaces of the polyolefin substrate.

8. A lithium-ion battery, comprising the composite separator for a lithium-ion battery according to any one of claims 1-7.

## Patentansprüche

1. Komposit-Separator für eine Lithium-Ionen-Batterie, umfassend ein Polyolefin-Substrat und eine Beschichtungsschicht, die auf einer Fläche des Polyolefin-Substrats gebildet ist, wobei die Beschichtungsschicht ein Bindemittel und anorganische Partikel umfasst, worin eine Wasserstoffbindung zwischen dem Bindemittel und den anorganischen Partikeln gebildet ist,
das Bindemittel ein wässriges Bindemittel umfasst, das -CO- oder -CN Funktionsgruppe enthält, und die anorganischen Partikel -OH Funktionsgruppe enthalten, und
eine Partikelgröße D50 der anorganischen Partikel größer als 0,3 µm und kleiner als 3 µm ist, und eine Partikelgröße D100 der anorganischen Partikel größer als 1 µm und kleiner als 15 µm ist.

2. Komposit-Separator für eine Lithium-Ionen-Batterie nach Anspruch 1, worin das Bindemittel durch Polymerisierung eines oder mehrerer Monomere gebildet ist, das bzw. die aus einer Gruppe bestehend aus Acrylat, Alkenylcarboxylat und Alkenylnitril ausgewählt ist bzw. sind.

3. Komposit-Separator für eine Lithium-Ionen-Batterie nach Anspruch 1, worin das Bindemittel ferner Carboxymethylcellulose umfasst.

4. Komposit-Separator für eine Lithium-Ionen-Batterie nach Anspruch 1, worin die anorganischen Partikel aus einer Gruppe ausgewählt sind, die aus Böhmitpartikeln, Aluminiumhydroxidpartikeln, Magnesiumhydroxidpartikeln und Kombinationen davon besteht.

5. Komposit-Separator für eine Lithium-Ionen-Batterie nach Anspruch 1, worin eine Dicke des Komposit-Separators in einem Bereich von 6 µm - 30 µm liegt.

6. Komposit-Separator für eine Lithium-Ionen-Batterie nach Anspruch 1, worin eine Dicke der Beschichtungsschicht in einem Bereich von 2 - 6 µm liegt.

7. Komposit-Separator für eine Lithium-Ionen-Batterie nach Anspruch 1, worin die Beschichtungsschicht auf einer einzigen Fläche oder auf doppelten Flächen des Polyolefin-Substrats gebildet ist.

8. Lithium-Ionen-Batterie, umfassend den Komposit-Separator für eine Lithium-Ionen-Batterie nach einem der Ansprüche 1-7.

## Revendications

1. Séparateur composite pour une batterie lithium-ion, comprenant un substrat de polyoléfine et une couche de revêtement formée sur une surface du substrat de polyoléfine, la couche de revêtement comprenant un liant et des particules inorganiques, où une liaison hydrogène est formée entre le liant et les particules inorganiques,
le liant comprend un liant aqueux contenant un groupe fonctionnel -CO- ou -CN, et les particules inorganiques contiennent un groupe fonctionnel - OH, et
une taille de particule D50 des particules inorganiques est supérieure à 0,3 µm et inférieure à 3 µm, et une taille de particule D100 des particules inorganiques est supérieure à 1 µm et inférieure à 15 µm.

2. Séparateur composite pour une batterie lithium-ion selon la revendication 1, où le liant est formé en polymérisant un ou plusieurs monomères choisis dans un groupe constitué d'un acrylate, d'un carboxylate d'alcényle et d'un nitrile d'alcényle.

3. Séparateur composite pour une batterie lithium-ion selon la revendication 1, où le liant comprend en outre de la carboxyméthylcellulose.

4. Séparateur composite pour une batterie lithium-ion selon la revendication 1, où les particules inorganiques sont choisies dans un groupe constitué de particules de boehmite, de particules d'hydroxyde d'aluminium, de particules d'hydroxyde de magnésium et de combinaisons de celles-ci.

5. Séparateur composite pour une batterie lithium-ion selon la revendication 1, où une épaisseur du séparateur composite est dans une plage de 6 µm-30 µm.

6. Séparateur composite pour une batterie lithium-ion selon la revendication 1, où une épaisseur de la couche de revêtement est dans une plage de 2-6 µm.

7. Séparateur composite pour une batterie lithium-ion selon la revendication 1, où la couche de revêtement est formée sur une surface unique ou sur des surfaces doubles du substrat de polyoléfine.

8. Batterie lithium-ion, comprenant le séparateur composite pour une batterie lithium-ion selon l'une quelconque des revendications 1 à 7.
